Europäisches Patentamt

European Patent Office

Office européen des brevets

(11) Publication number: **0 264 227**
**A2**

## EUROPEAN PATENT APPLICATION

(21) Application number: 87308914.8

(22) Date of filing: 08.10.87

(51) Int. Cl.4 **C08J 7/12 , B29C 71/04 ,**
**B60S 1/38**

(30) Priority: 09.10.86 JP 239095/86

(43) Date of publication of application:
**20.04.88 Bulletin 88/16**

(84) Designated Contracting States:
**DE FR GB**

(71) Applicant: **Nippon Wiperblade Co., Ltd.**
**998, Oaza Kamiochiai**
**Yono-shi Saitama-ken(JP)**

(72) Inventor: **Sakai, Masao c/o Nippon Wiperblade**
**Co., Ltd.**
**998, Oaza Kamiochiai**
**Yono-Shi Saitama-Ken(JP)**

(74) Representative: **Spall, Christopher John et al**
**BARKER, BRETTELL & DUNCAN 138 Hagley**
**Road**
**Edgbaston Birmingham B16 9PW(GB)**

(54) **Rubber member in windshield wiper.**

(57) A rubber member (1) for use in a windshield wiper, being selected from a high molecular compound selected from the group including natural rubber, synthetic rubber, elastomer, synthetic resin and the like, has on the surface thereof a polymer coating (2) which has been formed directly from a monomer gas by utilizing plasma energy.

*FIG. 1*

EP 0 264 227 A2

## RUBBER MEMBER in WINDSHIELD WIPER

Field of the Invention

This invention relates to a windshield wiper and, particularly to a rubber member for use in the windshield wiper.

Description of Prior Art

In a windshield wiper for use in a vehicle, there is a problem to reduce the frictional resistance between the surface of the windshield and the rubber member of the windshield wiper. Japanese Patent Publication 37-3807 shows one solution for reducing the friction between the rubber member and the surface of the windshield, wherein the rubber member of the windshield wiper consisting of such as natural rubber, synthetic rubber or synthetic resin is treated by organic or inorganic chemical such that the olefinic linkage is modified into single bond without causing cross-linkage or cyclization thereby increasing the flexibility of the molecule and decreasing the frictional resistance. However, the solution can only be applied to the rubber member of unsaturated compound having the olefinic linkage or the double bond, thus, the solution cannot be applied to a rubber member not having the double bond.

Japanese Patent Disclosure (Kokai) 60-221438 shows a method for connecting the fluorine atom with the carbon atom in the surface portion of the windshield wiper rubber of a high molecular compound, thereby decreasing the frictional resistance of the surface portion and improving the abrasion resistance, the weather resistance, the ozone resistance, the heat resistance, the chemical resistance, the water resistance and the aging resistance. However, there are shortcomings such that the adhesion property of the treated layer is not sufficiently high, the handling of the treated product is troublesome and the like.

Summary of the Invention

The present invention has been made in view of the circumstances aforementioned, and aims to provide a novel rubber member for use in the windshield wiper.

According to the invention, there is provided a rubber member of a high molecular compound selected from a group including natural rubber, synthetic rubber, elastomer, synthetic resin and the like, and having on the surface thereof a polymer coating which has been formed directly from a monomer gas by utilizing plasma energy.

The present invention enables to apply a frictional resistance decreasing treatment on the surface of the rubber member not having the double bond, and enables to solve problems such as chattering or sticking of the rubber member in actuating the windshield wiper.

Brief Description of the Drawing

Further objects and effects of the invention will become apparent from the following detailed description in conjunction with the drawing, in which:

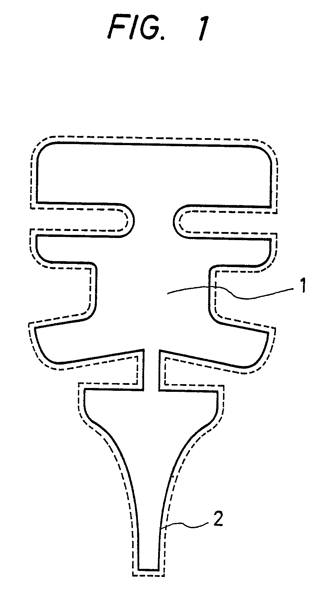

Fig. 1 is a sectional view of a rubber member of a windshield wiper according to the present invention.

Detailed Description of Preferred Embodiments

A rubber member of EPDM (ethylene propylene diolefine copolymerized compound) and a rubber member of urethane rubber were respectively formed into predetermined configuration, and were put into a plasma polymerizating apparatus. A plasma condition was made under the following conditions:

Degree of vacuum: 0.1 Torr

Cycles of electric discharge: 20 KHz

Power of electric discharge: 30-120 mA (600-700 V)

As a monomer gas for forming a polymer coating, a propylene hexafluoride ($C_3F_6$) gas was introduced at the rate of 8 cc/min, and plasma treatment was performed by one hour so that a polymer coating is formed on the surface of the rubber material directly from the monomer gas. (The treatment is referred hereinafter as plasma coating in the specification.)

Table 1 shows the thickness of the coating and the dynamic friction coefficient when the electric current is 30 mA, 75 mA and 120 mA. The thickness of the coating was measured from the reflection electron image sectional photograph obtained from an electron microscope, and the dynamic friction coefficient was measured by rotating the rubber member having the configuration of the windshield wiper rubber on a rotating glass disc (rotational speed of 1.0 m/sec) at the load of 15 gr/cm, and under a fully dry condition.

## Table 1

| | | Thickness $\mu$m | | Fric. Coef. $\mu$ | |
|---|---|---|---|---|---|
| | | EPDM | urethan rubber | EPDM | urethan rubber |
| not treated rubber | | 0 | 0 | 2.9 | 4.8 |
| Plasma Coating electric current | 30 mA | 0 | 0.8 | 2.9 | 4.4 |
| | 75 mA | 2.0 | 2.3 - | 2.5 | 3.1 |
| | 150 mA | 2.8 | 3.6 | 2.3 | 2.5 |

By utilizing the monomer gas of propylene hexafluoride, a fluorine contained polymer coating was formed by the plasma coating process. It will be understood that the thickness of the coating increases and the dynamic frictional coefficient decreases in response to the increase of the electric current.

The monomer gas is not limited to the propylene hexafluoride, and may be substituted by tetrafluoro ethylene ($CF_2 = CF_2$), ethylene ($CH_2 = CH_2$), stylene ($C_6H_5CH = CH_2$), fluorine ($F_2$), chlorine ($Cl_2$), chlorotrifluoro-ethylene ($CF_2 = CFCl$) or the like.

Further, the electric discharge utilized in the embodiments was of a low frequency of 20 KHz, however, a high frequency such as 13.56 MHz or a micro wave can also be utilized and, also, the degree of the vacuum and the power of the electric discharge are not limited to the values described as above.

The attached drawing shows a sectional view of a rubber member according to the invention as a typical wiper rubber of a windshield wiper, wherein the entire surface of the rubber member 1 is covered by a coating 2 of high molecular compound.

According to the invention, a polymer coating is formed directly from a monomer gas by the plasma energy on the surface of the rubber member, thus, a friction reducing treatment can be applied on a rubber member of the material not having double bond therein. As the result, it is possible to apply the friction reducing treatment on only the surface portion of a rubber member of soft material, and to form a coating of high molecular compound having a low frictional resistance and a high adhering property.

The polymer coating according to the invention is free from pinholes, has a uniform thickness and is superior in the flatness of the surface, thus, the wiping property is improved and, the problems of chattering and sticking are solved and the wiping property of the wiper can also be improved.

The present invention can be applied not only to the rubber member of the windshield wiper but also to other applications such as O-rings and the like.

## Claims

1. A rubber member of a high molecular compound selected from the group including natural rubber, synthetic rubber, elastomer, synthetic resin and the like, and having on the surface thereof a polymer coating which has been formed directly from a monomer gas by utilizing plasma energy.

2. A rubber member as set forth in claim 1, wherein said rubber member is a wiperblade rubber in a windshield wiper.

3. A rubber member as set forth in claim 1, wherein said high molecular compound does not have double bond.

4. A rubber member as set forth in claim 1, wherein said monomer gas is selected from the group including propylene hexafluoride ($C_3F_6$), tetrafluoro ethylene ($CF_2 = CF_2$), ethylene ($CH_2 = CH_2$), stylene ($C_6H_5CH = CH_2$), fluorine ($F_2$), chlorine ($Cl_2$), and chloro-trifluoro-ethylene ($CF_2 = CFCl$).

# FIG. 1